# EUROPEAN PATENT SPECIFICATION

(11) **EP 2 381 198 B1**
(45) Date of publication and mention of the grant of the patent: **15.03.2017**
(21) Application number: 10004249.8
(22) Date of filing: 21.04.2010
(51) Int. Cl.: F25J 3/06, F25J 3/02, B01D 53/00

(54) **Method for separating carbon dioxide from flue gas of combustion plants**
Verfahren zur Abscheidung von Kohlenstoffdioxid von Rauchgas aus Verbrennungsanlagen
Procédé pour séparer du dioxyde de carbone d'un effluent gazeux provenant des installations de combustion

(43) Date of publication of application: 26.10.2011
(73) Proprietor: General Electric Technology GmbH, 5400 Baden (CH)
(72) Inventor: Stallmann, Olaf, 55270 Essenheim (DE)
(74) Representative: General Electric Technology GmbH

(56) References cited:
- DE-A1- 19 744 844
- FR-A1- 2 884 305
- FR-A1- 2 918 579
- FR-A3- 2 934 170
- JP-A- 56 077 673
- US-A1- 2008 173 585
- US-A1- 2008 196 584
- US-A1- 2009 013 868
- US-A1- 2009 298 957
- WILKINSON M B ET AL: "Oxyfuel Conversion of Heaters and Boilers for CO2 Capture", 5 May 2003 (2003-05-05), SECOND NATIONAL CONFERENCE ON CARBON SEQUESTRATION, WASHINGTON, DC, PAGE(S) 1 - 13, XP002561951, [retrieved on 2003-05-05] * figure 3 *

## Description

The invention relates to a method and a device for the liquefaction of the CO₂ contained in the flue gases of combustion processes; for example a fossil fuel fired steam power plant. The liquefaction of CO₂ from flue gas using cryogenic methods has been known for quite a long time. Most cryogenic methods for the production of liquid CO₂ out of combustion flue gases use conventional separation schemes having two or more separation stages. These installations for liquefying CO₂ are relatively simple and work without problems. One major disadvantage of these installations is their high energy demand having negative effects on the efficiency of the power plant.

From US 2008/0196584 A1 and the article "Oxyfuel conversion of heaters and Boiler for CO2 capture" by M. Wilkinson and M. Simmonds processes for the separation of carbon dioxide from the flue gas of an oxy-combustion power plant is known.

From FR 2 884 305 and US 2009/0013868 A1 processes for the separation of carbon dioxide from a flue gas is known.

From US 2008/0173585 A1 a process for purifying contaminated carbon dioxide is known.

Thus the invention has the object to provide a method for liquefying the CO₂ contained in the flue gas operating with a reduced energy demand and thus increasing the net efficiency of the power plant. It is a further object of the invention to raise the purity of the liquefied CO₂ without increasing the energy demand of the process.

At the same time the method should be as simple as possible and the operation of the installation easy to control in order to guarantee a robust and trouble-free operation. According to the invention this object is solved with a method according to claim 1.

By using a second heat exchanger and a CO2 stripper in the second separation stage a stream of liquid CO2 from the first separation stage enters the CO2 stripper directly and a CO2 stream from the first separation stage enters the C02 stripper via the second heat exchanger. This method allows to produce CO2 qualities with a purity of more than 99% vol.

Preferably the liquid CO2 in the CO2 stripper is boiled by a reboiler and from the top of the CO2 stripper offgas is extracted, expanded in a pressure control valve and used in the separation stages for cooling purposes the auxiliary refrigeration duty requirements can be reduced.

Preferably, the first cooler is supplied with chilled water from the first separation stage. This provides liquid CO2 product at a first, higher pressure level, thus minimizing compression requirements.

The method according to an embodiment of the invention establishes an open refrigeration loop and thereby avoiding the installation of a dedicated refrigeration unit. This raises the energy efficiency and reduces the cost for erecting the CO2 liquification plant.

By collecting the liquid CO2 from the reboiler and from the CO2 stripper in a buffer drum the compression requirements of the subsequent vaporized CO2 are minimzed.

If a part of the liquid CO2 is extracted from the buffer drum or the CO2 stripper and delivered by a second product pump to the delivery side of the second compressor or the suction side of a first product pump a further reduction of the compression requirements can be achieved.

Preferably the method comprises that the flue gas is compressed in a first compressor, cooled in a first cooler and/or dried in a drier before entering the first separation stage reduces the energy consumption of the process and the maintenance of the drying device.

If offgas from the last separation stage is expanded to approximately 17 bar and resulting in a temperature of approximately -54 °C before entering a heat exchanger of the last separation stage the flue gas compression requirements can be reduced to a minimum, while avoiding dry ice formation.

The subsequent drawings show background information and some embodiments of the claimed invention.

### Drawings

Fig. 1: An embodiment not according to the invention,
Fig. 2: an embodiment of the claimed invention comprising a separation column and an open refrigeration loop,
Fig. 3: an embodiment of the claimed invention comprising a second product pump for liquefied CO₂,
Fig. 4: an embodiment of the claimed invention with a two stage expansion regime for the offgas using two expansion turbines and
Fig. 5: an embodiment of the claimed invention.

### Process description

In the figures the temperature and the pressure at various points of the flue gas stream as well as of the CO₂ are indicated by so-called flags. The temperatures and the pressures belonging to each flag are compiled in a chart in the following. It is obvious for a man skilled in the art that these temperatures and pressures are meant as an example. They can vary depending on the composition of the flue gas, the ambient temperature and the requested purity of the liquid CO₂.

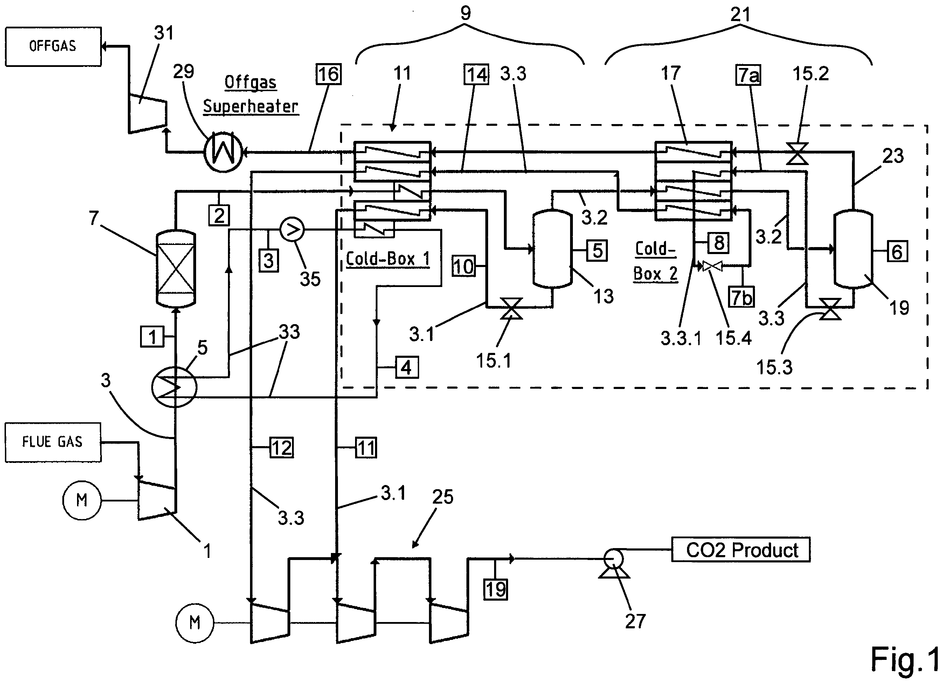

The block diagram shown in figure 1 represents a method for the liquefaction of C02 contained in the flue gases. Although the method is different from the one claimed, it is helpful for understanding the method of the invention, which is defined in claim 1.

As can be seen from figure 1 in a first compressor 1 the flue gas is compressed. The first compressor 1 may execute a multi-stage compression process with coolers and water separators between each compression stage (not shown) separating most of the water vapour resp. water from the flue gas 3.

When being emitted by the first compressor 1 the flue gas 3 has a temperature significantly higher than the ambient temperature and then is cooled to approximately 13°C by a first cooler 5. The pressure is approximately 35.7 bar (cf. flag 1).

Between the first compressor 1 and the first cooler 5 and the flue gas has to be cleaned from mercury which may condense and surely would harm the aluminium brazed heat exchangers 11 and 17. Mercury removal may be done in a fixed bed Hg-Adsorber (not shown).

The moisture still contained in the flue gas stream 3 is freed from water by a suitable drying process e. g. adsorption dried in a drier 7 and subsequently conveyed to a first separation stage 9. This first separation stage 9 comprises a first heat exchanger 11 and a first separation drum 13. The first heat exchanger 11 serves for cooling the flue gas stream 3. As a result of this cooling a partial condensation of the CO₂ contained in the flue gas stream 3 takes place. Consequently, the flue gas stream 3 enters the first separation drum 13 as a two-phase mixture of gas and liquid. In the first separation drum 13 the liquid phase and the gaseous phase of the flue gas stream 3 are separated mainly by gravitation. In the first separation drum 13 the pressure is approximately 34,7 bar and the temperature is -19°C (cf. flag no. 5).

At the bottom of the first separation drum 13 liquid CO₂ (cf. ref. 3.1) is extracted and by means of a first pressure reducing valve 15.1 expanded to a pressure of approximately 18.4 bar. The expansion in the first pressure reducing valve 15.1 results in a temperature of the CO₂ between -22°C and -29°C (cf. flag 10). This CO₂ stream 3.1 cools the flue gas stream 3 in the first heat exchanger 11. As a result the CO₂ stream 3.1 evaporates. At the exit of the first heat exchanger 11 the CO₂ stream 3.1 has a temperature of approximately + 25°C and a pressure of approximately 18 bar (cf. flag no. 11). This CO₂ stream 3.1 is conveyed to a second stage of an second compressor 25.

A second stream 3.2 of flue gas is extracted at the head of the first separation drum 13 in a gaseous state and is subsequently cooled in a second heat exchanger 17 and partially condensed. After having passed the second heat exchanger 17 the second stream 3.2 is a two-phase mixture and is conveyed to a second separation drum 19. The second heat exchanger 17 and the second separation drum 19 are the main components of the second separation stage 21.

In the second separation drum 19 again a gravity-supported separation between the liquid phase and the gaseous phase of the second stream 3.2 takes place. In the second separation drum 19 there is a pressure of approximately 34.3 bar and a temperature of approximately -50°C (cf. Flag no. 6).

The gaseous phase in the second separation drum 19, the so-called offgas 23, is extracted at the head of the second separation drum 19, expanded to approximately 17 bar in a second pressure reducing valve 15.2, so that it cools down to approximately -54°C. The offgas 23 flows through the second heat exchanger 17 thereby cooling and partially condensing the flue gas 3.2.

At the bottom of the second separation drum 19 liquid CO₂ stream 3.3 is extracted and expanded to approximately 17 bar in a third pressure reducing valve 15.3, so that it reaches a temperature of -54°C (cf. flag no. 7a).

The CO₂ stream 3.3 is conveyed to the second heat exchanger 17, too. In the second heat exchanger 17 a part of the liquid CO₂ 3.3 evaporates and the stream 3.3.1 is extracted from the second heat exchanger 17, expanded to approximately 5 to 10 bar in a fourth pressure reducing valve 15.4, so that a temperature of -54°C is reached (cf. flag no. 7b), and again conveyed to the second heat exchanger 17.

After the stream 3.3 has passed through the second heat exchanger 17 it is conveyed to the first heat exchanger 11. At the entrance of the first heat exchanger 11 the stream 3.3 has a pressure of approximately 5 to 10 bar and a temperature between -22 °C and -29°C (cf. flag no. 14). The partial stream 3.3 takes up heat in the first heat exchanger 11, so that at the exit of same it has a temperature of approximately -7°C with a pressure of approximately 5 to 10 bar. The third partial stream 3.3 is conveyed to the first compression stage of a second compressor 25 and compressed to approximately 18 bar. Subsequently the compressed CO₂ stream 3.1 is conveyed to second stage of the multi-stage compressor 25 shown in figure 1.

Intercooler between the various stages of the second compressor 25 and an aftercooler for the compressed CO₂ are not shown in the figure 1 to 5.

At the exit of the second compressor 25 the compressed CO₂ has a pressure of between 60 bar and 110 bar and a temperature of 80°C to 130°C (c. f. flag 19). In an aftercooler, which is not shown, the CO₂ is cooled down to ambient temperature.

If necessary the CO₂ can be either fed directly into the pipeline or liquefied and conveyed from a first product pump 27 e. g. into a CO₂-pipeline (not shown). The first product pump 27 raises the pressure of the liquid CO₂ to the pressure inside the CO₂-pipeline, which may be approximately 120 bar.

Going back to the offgas 23 that is extracted from the top of the second separator drum 19 it can be seen that the offgas 23 streams through a second pressure control valve 15.2, the second heat exchanger 17 and the first heat exchanger 11, thereby taking up heat from the flue gas stream 3. At the exit of the first heat exchanger 11 the offgas 23 has a temperature of approximately 26°C to 30°C with a pressure of approximately 26 bar (cf. flag no. 16).

For maximising the energy recovery the offgas 23 is overheated in an offgas superheater 29 and then conveyed to an expansion turbine 31 or any other expansion machine. In the expansion machine mechanical energy is recycled and afterwards the offgas 23 is emitted into the surroundings with a pressure approximately corresponding to the surrounding pressure.

For cooling purposes the first cooler 5 may be connected via pipes 33 and a chilled water pump 35 with the first heat exchanger 11. Inside the pipes 33 a mixture of water and glycol flows, supplying the first cooler 5 with chilled water (cf. flags no. 3 and 4).

Water which will freeze in the downstream chilling equipment will be removed from the feed gas, e. g. by adsorption, in a drier 7. To minimize the then required desiccant mass of the drier 7 the flue gas may be cooled in the first cooler 5 to approx. 13°C using a glycol/water mixture having been chilled in a first heat exchanger 11 of the Cold Box 1. The glycol/water circuit may comprise a chilled water pump 35.

The glycol/water from the first cooler 5 has a temperature of approx. 40 - 50° C (cf. flag 3) and is pumped to an air or water heat exchanger (not shown) and cooled to ambient temperature. The cooled glycol/water is then directed to the first heat exchanger 11 for chilling using the product and off gas streams 3.1, 3.2 and 23).

Coming from the first heat exchanger 11 the chilled glycol/water has a temperature of approx. 10° C (cf. flag 4) and is returned to the first cooler 1. The chilled glycol/water outlet temperature control may be cascaded on a circuit flow controller. The duty of the first cooler 5 is adjusted by glycol/water supply temperature.

Supplying the first cooler 5 from the first heat exchanger 11 has some advantages: First off all, the flue gas can be cooled down to approx. 10 °C, which allows an efficient drying process in the drier 7.

In case of a first cooler 5 tube rupture or leakage of flue gas into the glycol/water cycle, this can easily be detected and does not immediately harm the first heat exchanger 11. Finally this arrangement is very energy efficient, reducing the energy consumption of the whole process.

**Table of flags, pressures and temperatures.**

| Flag no. | Temperature, approx. [°C] | Pressure, approx. [bar] |
|---|---|---|
| 1 | 13 | 35,7 |
| 2 | 13 | 35 |
| 3 | 40° C to 50°C | - |
| 4 | 10 | - |
| 5 | -19 | 34,7 |
| 6 | -50 | 34,3 |
| 7 | -53 °C | 5 to 10 |
| 7a | -54 | 27 |
| 7b | -54 | 5 to 10 |
| 8 | -47 | 16,5 |
| 10 | - 22 to - 29 | 18,4 |
| 11 | 25 | 18 |
| 12 | -7 | 5-10 |
| 14 | -22 to -29 | 5-10 |
| 16 | 26 to 30 | 26 |
| 19 | 80 to 130 | 60 to 110 |
| 20 | - | 36,5 |
| | The tolerances for the temperatures are ± 5°C | The tolerances for the pressures are ± 5 bar |

After condensed water separation in a flue gas separator (not shown) between the first cooler 5 and the drier 7 which will remove most of the water while staying sufficient far away from hydrate formation conditions the flue gas is dried in a flue gas drier 7.

To prevent plugging of the heat exchangers 11, 17 and solid deposition in the chilling section, namely the first cooler 5, a filter (not shown) can be foreseen to limit particle size in the flue gas to about 1 µm.

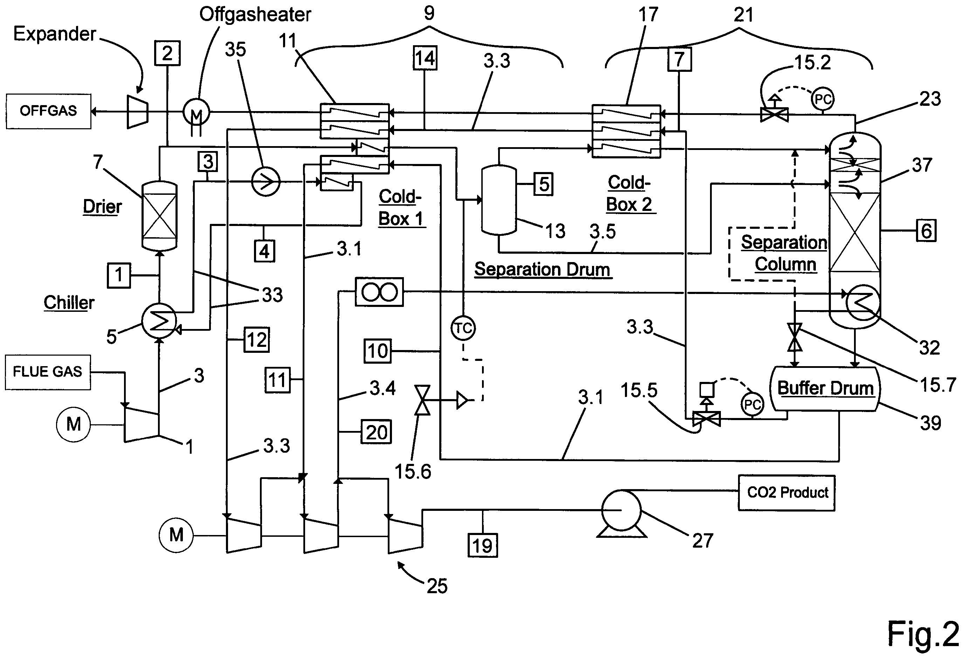

Figure 2 shows a block diagram showing an example of apparatus suitable for carrying out the method according to the invention.

figure 2 identical components are designated with identical reference numerals. The statements concerning figure 1 correspondingly apply.

The dry gas from the drier 7 is partly condensed in the first heat exchanger 11, using the product stream 3.3 and the off gas stream 23, to a temperature of approx. -19 °C. The produced liquid CO₂ is separated in a first separation drum 13. The liquid destination depends on the required product quality. For Enhanced Oil recovery (EOR) mode of the process the liquid from first separation drum 13 will be sent to a CO₂ Stripper 37 column at an intermediate feed location while in Saline Acquifer (SA) mode the liquid is sent directly to the CO₂ Stripper 37 bottoms product stream. The second alternative is not shown in the figures. The overhead vapor 3.2 from the first separation drum 13 is further condensed in the second heat exchanger 17 using the product stream 3.3 and the off gas stream 23 before being sent as reflux to CO₂ stripper 37 top.

The system pressure is selected such that condensation of the vapor is possible while keeping a sufficient high distance from sublimation and melting points of CO₂.

The CO₂ Stripper 37 consists of a column with reboiler 32 and may comprise a side reboiler (not shown). No overhead condensation system is necessary in this set up.

The feed to CO₂ Stripper 37 is sub-cooled. This eliminates the need of a dedicated overhead condensing and reflux system. The sub cooled feed provides sufficient CO₂ condensation in the CO₂ stripper 37 to meet the required CO₂ recovery. If needed, a stream of CO₂ can be taken from the boiler 32 return line to increase the total reflux (not shown). CO₂ quality /purity will be kept within limits by adjustment of the duties of reboiler 32 and the optional side reboiler.

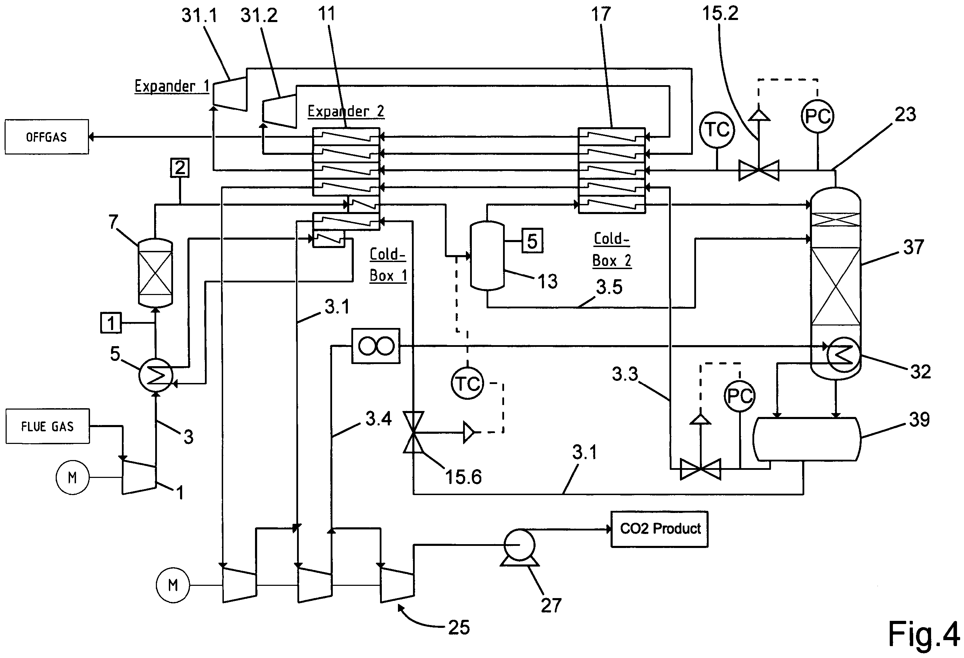

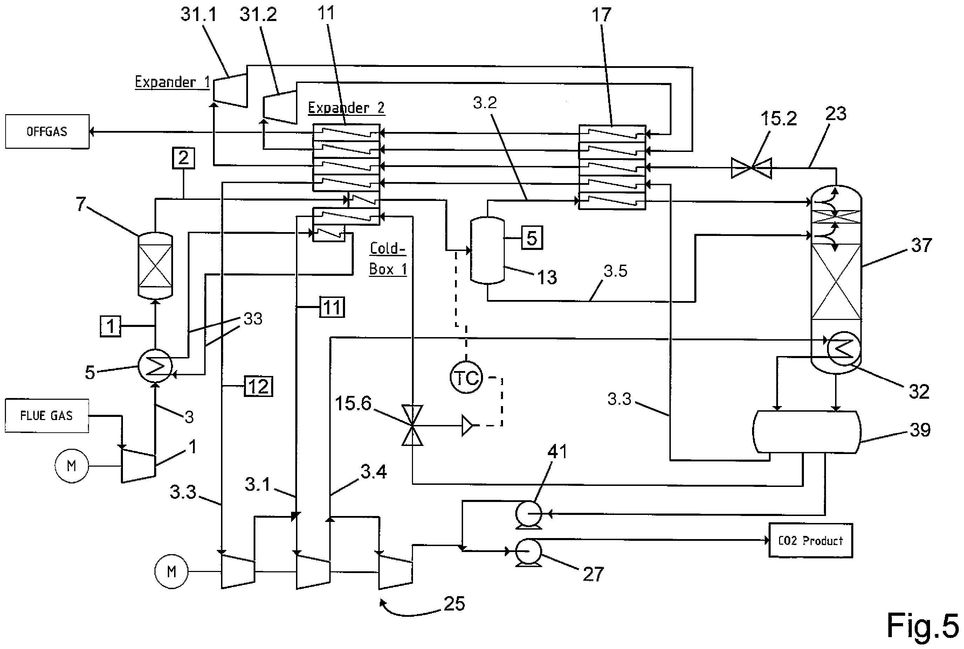

The pressure in the CO₂ stripper 37 will be controlled by the overhead vapor draw rate. Since flashing of the offgas 23 from approx. 32 bar at the top of the CO₂ stripper 37 to stack conditions would lead to temperatures of -90°C a cascaded system is installed (cf.figures 4/5). This ensures that the temperature of the offgas 23 can be kept sufficiently high. In figure 2 only one pressure reducing valve 15.2 is shown. After having passed the second and the first heat exchanger 17 and 11 the offgas 23 may be superheated in an offgas heater (no ref. no in fig.2) and an expander for energy recovery.

The required heat input into reboiler 32 will be provided by condensation of CO₂ refrigerant 3.4 from the output of the second stage of the second compressor 25. This CO₂ refrigerant 3.4 flows after having passed the reboiler 32 via a pressure reducing valve 15.7 to the buffer drum 39. The reboiler 32 duty will be adjusted by flooding of the refrigerant side via level control. Level set point is controlled via CO₂ analyzer cascade. The sample point is located in the bottom section of the CO₂ Stripper column 37. The resulting liquid refrigerant is then sent to refrigerant receiver or buffer drum 39.

The column sump product is withdrawn on two routes one on level control and the other on flow control.

The first route of the CO₂ sump product is on level control from reboiler 32 to the buffer drum 39. Optional a side reboiler (not shown) may be installed where the liquid is further sub-cooled. This ensures that the vapor fraction after flashing is minimized. The sub-cooled liquid is then directed to the buffer drum 39.

The buffer drum 39 has been foreseen for liquid management, this means collection and distribution of refrigerant to the first heat exchanger 11 and/or second heat exchanger 17.

The liquefied CO₂ refrigerant from the buffer drum 39 is expanded at different levels (c. f. flags 7 and 10). Consequently CO₂ refrigerant is provided on two temperature levels. The lowest temperature level is at approx. -54°C where the CO₂ is flashed via expansion valve 15.5 a to 5.8 bar (c. f. flag 7), respective 7.3 bar. This CO₂ product and low pressure stream 3.3 enters the second heat exchanger 17.

The second temperature level is at approx. -22°C to - 29 °C. The high pressure refrigerant stream 3.1 is expanded via expansion valve 15.6 to about 18 bar (c. f. flag 10) and used in the first heat exchanger 11 to provide the refrigeration.

In the first heat exchanger 11 and the second heat exchanger 17 the CO₂ product stream 3.3 will be vaporized and is sent, coming from the outlet of the first heat exchanger 11 at 3°C, to the first stage of second compressor 25. The high pressure refrigerant 3.1 is superheated to about 26°C in the first heat exchanger 11(c. f. flag 11).

After having passed the product stream 3.3 is compressed and liquefied by a multi-stage second compressor 25. The high pressure refrigerant stream 3.1 enters second compressor 25 at the second stage.

The CO₂ product vapor 3.3 coming from the first heat exchanger 11 is recompressed by 3 stage CO₂ compressor 25.

The second compressor 25 load is adjusted via suction pressure control. To minimize compression requirements the inlet temperature is used as a control for adjusting the low pressure refrigerant flow.

After the first stage compression and cooling the CO₂ product flow 3.3 is combined with the high pressure refrigerant stream 3.1 from the first heat exchanger 11.

The CO₂ draw off needed for reboiler 32 operation is taken after the 2nd stage of compression at a pressure of about 36,5 bar (c. f. flag 20). This ensures that condensation temperature is around 5 °C higher than the reboiler temperature. The principle applied here is an open loop refrigeration cycle. An advantage of this arrangement is that the CO₂ product will not be contaminated in case of a leakage or tube rupture in the heat exchanger.

The outlet pressure of the 2nd stage of compressor 25 is adjusted via 3rd stage inlet guide vanes. The kick back on flow control is provided for the 1st and 2nd stage.

The outlet of the 3rd stage of second compressor 25 may be used to heat the off gas to stack which is reheated to at least 40°C.

The kick back on flow control is provided for the 3rd stage.

The outlet pressure of the 3rd stage is preferably below 72 bar which is also below critical pressure of CO₂ (73.773 bar). Therefore subcritical condensation in the last air/water (after-)cooler (not shown) is possible. The outlet pressure is adjusted by varying the air/water cooler condensation duty and blow down to stack.

Liquefied CO₂ product may be led to a product receiver (not shown) from where it can be pumped into a product pipeline.

In case ambient conditions are hot, only compression to supercritical conditions and cooling of the CO₂ may be applicable.

By using a water glycol circuit comprising the first cooler 5, a chilled water pump 35, the first heat exchanger 11 and the necessary duct work 33 allows an efficient cooling of the flue gas from temperatures of approximately 60° C to approximately 13° C (c. f. flag. 1).

Using the first heat exchanger 11 as a heat sink for the glycol water circuit has several advantages. One advantage of this layout is that it allows a very efficient cooling with regard to the temperatures reached and the energy consumption is achieved. Further on, the drier size can be minimized.

A second advantage that can be realized with all embodiments of the claimed invention is the fact, that in the whole plant except the water glycol circuit only flue gas or CO₂ is used for running the process. This means that no dangerous or explosive media, serving as refrigerant, have to be used which reduces the costs for the erection and the operation of the plant.

A further advantage is the fact that in case of a malfunction in the components of the CO2-refrigeration the quality of the CO₂-product is not affected.

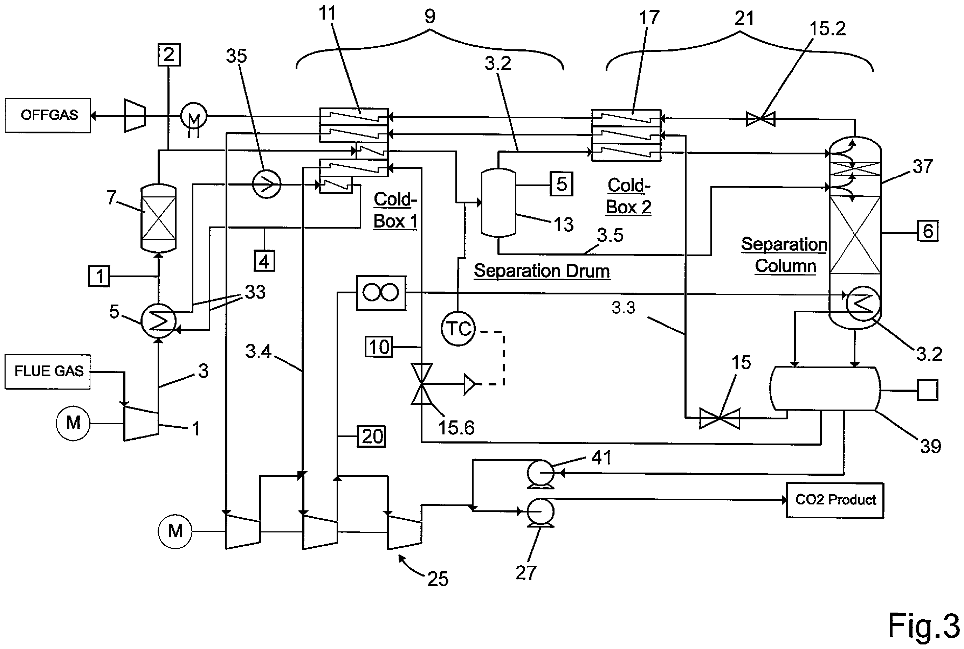

Figure 3 shows another embodiment of the claimed invention.

By comparing figures 2 and 3 it can be seen that most components and the related piping are identical. For this reason only the differences are described.

As can be seen from figure 3 a second product pump 41 is installed. This second product pump 41 extracts high pressure refrigerant from the buffer drum 39 that has a pressure of approximately 31 bar and raises the pressure of this high pressure refrigerant to a pressure of 53 bar in winter and a maximum pressure of 72 bar in summer, depending on the ambient conditions. Worst case would be to raise the pressure directly to pipeline conditions. This pressure level is similar to the pressure level at the end of the second compressor 25 and therefore it is possible to directly transport high pressure refrigerant, which is not needed for cooling, directly from the buffer drum 39 to the suction side of the first product pump 27. This leads to a significant reduction of the energy consumption of the whole plant and allows a wider range of loads for running the whole plant.

The embodiment shown in figure 4 has comprises two stage expansion for the offgas 23 using a first expansion turbine 31.1 and a second expansion turbine 31.2 for the offgas 23. The expanded offgas 23 can be used for refrigeration purposes in the heat exchangers 11 and 17. With this arrangement the energy consumption of the plant can be reduced by expanding the offgas stream 23 in two stages and use the mechanical output of the expansion machines 31.1 and/or 31.2 energy for driving for e. g. a generator or the compressors 1 or 25.

Figure 5 shows an embodiment according to the claimed invention comprising a chilled water circuit 5, 33, 35 and 11, a CO₂ stripper 37, a second product pump 41 and the two stage expansion turbines 31.1 and 31.2. This embodiment comprises some of the features and advantages of the embodiments shown in the figures 1 to 4.

## Claims

1. Method for producing liquid CO₂ out of combustion flue
gases wherein the flue gas (3) is compressed in a first compressor (1), subsequently cooled in a first cooler (5) and partially condensed in at least two separation stages (9, 21) to form a liquid CO₂ (3.1, 3.3) and expanded to form expanded liquid (3.1, 3.3),
wherein the at least two separation stages (9, 21) are cooled by expanded offgas (23) and the expanded liquid CO₂ (3.1, 3.3), and wherein the second separation stage (21) comprises a second heat exchanger (17) and a CO₂ stripper (37), wherein a stream of liquid CO₂ (3.5) from the first separation stage (9) enters the CO₂ stripper (37) directly,
wherein a CO₂ stream (3.2) from the first separation stage (9) enters the CO₂ stripper (37) via the second heat exchanger (17),
wherein the CO₂ stripper (37) provides the offgas which is expanded and used for cooling said at least two separation stages (9, 21), and wherein the liquid CO₂ (3.1, 3.3) is expanded to a first pressure level (flag 12) and to a second pressure level (flag 11) and the expanded liquid CO₂ is fed to a first and second stage of a second compressor (25) respectively after having passed at least one of the separation stages (9, 21) for cooling the flue gas.

2. Method according to claim 1, **characterized in, that** the first cooler (5) is supplied with chilled water from the first separation stage.

3. Method according to one of the claims 1 through 2, **characterized in, that** the liquid CO₂ in the CO₂ stripper (37) is boiled by a reboiler (32) and that from the top of the CO₂ stripper (37) offgas (23) is extracted, expanded in a pressure control valve (15.2) and used in the separation stages (9, 21) for cooling purposes.

4. Method according to any one of the claims 1 to 3, **characterized in, that** the reboiler (32) is supplied with heat from the second compressor (25), preferably from a second stage of the second compressor (25).

5. Method according to one of the claims 3 or 4, **characterized in, that** the liquid CO₂ from the reboiler (32) and the CO₂ stripper (37) are collected in a buffer drum (39).

6. Method according to claim 5, **characterized in, that** the at least two separation stages (9, 21) are supplied with liquid CO₂ from the buffer drum (39).

7. Method according to claim 5 or 6, **characterized in, that** a part of the liquid CO₂ is extracted from the buffer drum (39) or the CO₂ stripper (37) and delivered by a second product pump (41) to the delivery side of the second compressor (25) or the suction side of a first product pump (27).

8. Method according to one of the foregoing claims, **characterized in, that** the flue gas is at least one of compressed in a first compressor (1), cooled in a first cooler (5) and dried in a drier (7) before entering the first separation stage (9).

9. Method according to one of the foregoing claims, **characterized in, that** offgas (23) from the last separation stage (21) is expanded to approximately 17 bar and resulting in a temperature of approximately -54 °C before entering a heat
exchanger (17) of the last separation stage (21).

10. Method according to one of the foregoing claims, **characterized in, that** the offgas (23) is superheated in a superheater (29) after having
passed all separation stages (21, 9) and expanded in at least one expansion machine (31, 31.1, 31.2) and subsequently fed again to the heat exchangers (17) of the last separation stage (21).

## Patentansprüche

1. Verfahren zum Erzeugen von flüssigem CO₂ aus Verbrennungsrauchgasen, wobei das Rauchgas (3) zum Bilden von flüssigem CO₂ (3.1, 3.3) in einem ersten Kompressor (1) verdichtet, anschließend in einem ersten Kühler (5) gekühlt und in mindestens zwei Trennstufen (9, 21) partiell kondensiert wird und zum Bilden einer ausgedehnten Flüssigkeit (3.1, 3.3) ausgedehnt wird,
wobei die mindestens zwei Trennstufen (9, 21) durch ausgedehntes Abgas (23) und das ausgedehnte flüssige CO₂ (3.1, 3.3) gekühlt werden und wobei die zweite Trennstufe (21) einen zweiten Wärmetauscher (17) und einen CO₂-Abscheider (37) aufweist, wobei ein Strom von flüssigem CO₂ (3.5) aus der ersten Trennstufe (9) in den CO₂-Abscheider (37) direkt eintritt,
wobei ein CO₂-Strom (3.2) aus der ersten Trennstufe (9) in den CO₂-Abscheider (37) über den zweiten Wärmetauscher (17) eintritt, wobei der CO₂-Abscheider (37) das Abgas bereitstellt, das ausgedehnt und zum Kühlen der mindestens zwei Trennstufen (9, 21) verwendet wird und wobei das flüssige CO₂ (3.1, 3.3) auf ein erstes Druckniveau (Flag 12) und auf ein zweites Druckniveau (Flag 11) ausgedehnt wird und das ausgedehnte flüssige CO₂ in eine erste bzw. eine zweite Stufe eines zweiten Kompressors (25) eingespeist wird, nachdem mindestens eine der Trennstufen (9, 21) zum Kühlen des Rauchgases durchlaufen wurde.

2. Verfahren nach Anspruch 1, **dadurch gekennzeichnet, dass** der erste Kühler (5) mit Kaltwasser aus der ersten Trennstufe versorgt wird.

3. Verfahren nach einem der Ansprüche 1 bis 2, **dadurch gekennzeichnet, dass** das flüssige CO₂ in dem CO₂-Abscheider (37) mittels eines Verdampfers (32) zum Sieden gebracht wird und dass aus dem oberen Teil des CO₂-Abscheiders (37) Abgas (23) extrahiert, in einem Drucksteuerventil (15.2) ausgedehnt und in den Trennstufen (9, 21) für Kühlungszwecke verwendet wird.

4. Verfahren nach einem der Ansprüche 1 bis 3, **dadurch gekennzeichnet, dass** der Verdampfer (32) mit Wärme aus dem zweiten Kompressor (25), vorzugsweise aus einer zweiten Stufe des zweiten Kompressors (25), versorgt wird.

5. Verfahren nach einem der Ansprüche 3 oder 4, **dadurch gekennzeichnet, dass** das flüssige CO₂ aus dem Verdampfer (32) und dem CO₂-Abscheider (37) in einer Puffertrommel (39) gesammelt wird.

6. Verfahren nach Anspruch 5, **dadurch gekennzeichnet, dass** die mindestens zwei Trennstufen (9, 21) mit flüssigem CO₂ aus der Puffertrommel (39) versorgt werden.

7. Verfahren nach Anspruch 5 oder 6, **dadurch gekennzeichnet, dass** ein Teil des flüssigen CO₂ aus der Puffertrommel (39) oder dem CO₂-Abscheider (37) extrahiert und mittels einer zweiten Produktpumpe (41) an die Lieferseite des zweiten Kompressors (25) oder die Saugseite einer ersten Produktpumpe (27) geliefert wird.

8. Verfahren nach einem der vorhergehenden Ansprüche, **dadurch gekennzeichnet, dass** das Rauchgas eines ist, das vor dem Eintreten in die erste Trennstufe (9) mindestens in einem ersten Kompressor (1) verdichtet, in einem ersten Kühler (5) gekühlt und in einem Trockner (7) getrocknet wird.

9. Verfahren nach einem der vorhergehenden Ansprüche, **dadurch gekennzeichnet, dass** Abgas (23) aus der letzten Trennstufe (21) vor dem Eintreten in einen Wärmetauscher (17) der letzten Trennstufe (21) auf etwa 17 bar und eine Temperatur von etwa -54 °C ergebend ausgedehnt wird.

10. Verfahren nach einem der vorhergehenden Ansprüche, **dadurch gekennzeichnet, dass** das Abgas (23) nach dem Durchlaufen aller Trennstufen (21, 9) in einem Überhitzer (29) überhitzt und in mindestens einer Expansionsmaschine (31, 31.1, 31.2) ausgedehnt und anschließend wieder in die Wärmetauscher (17) der letzten Trennstufe (21) eingespeist wird.

## Revendications

1. Procédé de production de CO₂ liquide à partir d'effluents gazeux de combustion dans lequel l'effluent gazeux (3) est comprimé dans un premier compresseur (1), puis refroidi dans un premier refroidisseur (5) et partiellement condensé dans au moins deux étages de séparation (9, 21) pour former un CO₂ liquide (3.1, 3.3) et dilaté pour former un liquide dilaté (3.1, 3.3), dans lequel les au moins deux étages de séparation (9, 21) sont refroidis par du gaz résiduel dilaté (23) et le CO₂ liquide dilaté (3.1, 3.3), et dans lequel le deuxième étage de séparation (21) comprend un deuxième échangeur de chaleur (17) et un extracteur de CO₂ (37), dans lequel un courant de CO₂ liquide (3.5) provenant du premier étage de séparation (9) pénètre dans l'extracteur de CO₂ (37) directement, dans lequel un courant de CO₂ (3.2) provenant du premier étage de séparation (9) pénètre dans l'extracteur de CO₂ (37) par le biais du deuxième échangeur de chaleur (17), dans lequel l'extracteur de CO₂ (37) fournit le gaz résiduel qui est dilaté et utilisé pour refroidir lesdits au moins deux étages de séparation (9, 21), et dans lequel le CO₂ liquide (3.1, 3.3) est dilaté jusqu'à un premier niveau de pression (drapeau 12) et jusqu'à un deuxième niveau de pression (drapeau 11) et le CO₂ liquide dilaté est introduit dans un premier et un deuxième étage d'un deuxième compresseur (25) respectivement après avoir passé au moins un des étages de séparation (9, 21) pour refroidir l'effluent gazeux.

2. Procédé selon la revendication 1, **caractérisé en ce que** le premier refroidisseur (5) est alimenté avec de l'eau réfrigérée provenant du premier étage de séparation.

3. Procédé selon une des revendications 1 à 2, **caractérisé en ce que** le CO₂ liquide dans l'extracteur de CO₂ (37) est porté à ébullition par un rebouilleur (32) et **en ce que** depuis le sommet de l'extracteur de CO₂ (37), du gaz résiduel (23) est extrait, dilaté dans une vanne de régulation de pression (15.2) et utilisé dans les étages de séparation (9, 21) à des fins de refroidissement.

4. Procédé selon l'une quelconque des revendications 1 à 3, **caractérisé en ce que** le rebouilleur (32) est alimenté avec de la chaleur provenant du deuxième compresseur (25), de préférence d'un deuxième étage du deuxième compresseur (25).

5. Procédé selon une des revendications 3 ou 4, **caractérisé en ce que** le CO₂ liquide provenant du rebouilleur (32) et de l'extracteur de CO₂ (37) est collecté dans un ballon tampon (39).

6. Procédé selon la revendication 5, **caractérisé en ce que** les au moins deux étages de séparation (9, 21) sont alimentés avec du CO₂ liquide provenant du ballon tampon (39).

7. Procédé selon la revendication 5 ou 6, **caractérisé en ce qu'**une partie du CO₂ liquide est extraite du ballon tampon (39) ou de l'extracteur de CO₂ (37) et délivrée par une deuxième pompe de produit (41) au côté refoulement du deuxième compresseur (25) ou au côté aspiration d'une première pompe de produit (27).

8. Procédé selon une des revendications précédentes, **caractérisé en ce que** l'effluent gazeux est comprimé dans un premier compresseur (1), et/ou refroidi dans un premier refroidisseur (5), et/ou séché dans un séchoir (7), avant de pénétrer dans le premier étage de séparation (9).

9. Procédé selon une des revendications précédentes, **caractérisé en ce que** du gaz résiduel (23) provenant du dernier étage de séparation (21) est dilaté jusqu'à environ 17 bar, ce qui se traduit par une température d'environ -54 °C, avant de pénétrer dans un échangeur de chaleur (17) du dernier étage de séparation (21).

10. Procédé selon une des revendications précédentes, **caractérisé en ce que** le gaz résiduel (23) est surchauffé dans un surchauffeur (29) après avoir passé tous les étages de séparation (21, 9) et avoir été dilaté dans au moins une machine de dilatation (31, 31.1, 31.2) et ensuite réintroduit dans les échangeurs de chaleur (17) du dernier étage de séparation (21).
